# EUROPÄISCHE PATENTSCHRIFT

(11) **EP 0 463 010 B1**
(45) Veröffentlichungstag und Bekanntmachung des Hinweises auf die Patenterteilung: **16.06.1993**
(21) Anmeldenummer: 90904263.2
(22) Anmeldetag: 10.03.1990
(51) Int. Cl.: B65B 25/06, B65B 9/15

(54) **VERPACKUNGSHÜLLE FÜR FLEISCH**
PACKAGING ENVELOPE FOR MEAT
ENVELOPPE D'EMBALLAGE POUR DE LA VIANDE

(30) Priorität: 16.03.1989 DE 3908585
(43) Veröffentlichungstag der Anmeldung: 02.01.1992
(73) Patentinhaber: Pi-Patente Gesellschaft mit beschränkter Haftung (GmbH) Entwicklung und Verwertung, 35435 Wettenberg (DE)
(72) Erfinder: MEIXNER, Hans-Werner, D-6301 Wettenberg (DE)
(74) Vertreter: Knefel, Siegfried, Dipl.-Math.
(86) Internationale Anmeldenummer: EP9000390
(87) Internationale Veröffentlichungsnummer: WO9010576

(56) Entgegenhaltungen:
- EP-A- 0 175 173
- CH-A- 662 543
- DE-C- 296 534
- US-A- 2 247 312
- US-A- 3 624 982
- US-A- 4 136 203
- US-A- 4 155 212

## Beschreibung

Die Erfindung betrifft eine Verpackungshülle für Fleisch. Derartige Verpackungen umhüllen das Fleisch, ohne es zu formen.

Zum Formen von Fleisch in eine annähernd runde Form, insbesondere in eine annähernd kreisförmige Querschnittsform, ist es bekannt, elastische Netze vorzusehen (FR-PS 1 560 425, EP 0 175 173 A1, US-PS 4,155,212, CH-PS 662 543 A5). Ferner sind Einrichtungen zum Einfüllen des Fleisches in die Umhüllung bekannt.

Derartige Netze dienen zur Einhaltung der Querschnitte, insbesondere bei Schweinefleisch, wie Kassler oder Rollbraten. Wird Fleisch in ein Gumminetz eingeführt, liegt auf dem Fleisch nach dem Einführen in das Gumminetz im Querschnitt in radialer Richtung eine Spannung, das heißt die Netzfäden belassen das Fleisch in der im Querschnitt runden Form oder drücken dieses sogar in eine runde Querschnittsform. Dies gilt auch dann, wenn das Fleisch mit Hilfe von Schnüren oder dergleichen abgebunden wird.

Aus diesem Grunde könnte man grundsätzlich derartige Netze oder Abbindevorgänge auch bei Rindfleisch (Roastbeef, Rinderfilet oder dergleichen) vornehmen. Dies ist aber kostenmäßig nicht günstig und verteuert den Großhandelspreis erheblich. Abbindevorgänge sind deshalb nicht verbraucherfreundlich, weil vor dem Verkauf des Fleisches die Abbindung entfernt werden muß und durch das Abbinden im Fleisch Abdrücke und gegebenenfalls Beschädigungen hinterbleiben. Außerdem muß das Fleisch zusätzlich verpackt werden, wodurch sich der Arbeitsaufwand vergrößert.

Ein weiterer Nachteil besteht darin, daß die Fäden des Netzes häufig am Fleisch haften, so daß die Oberfläche des Fleisches beim Lösen des Netzes beschädigt wird. Aus diesem Grunde hat man bereits zwischen Netz und Fleischoberflächen eine Unterlage (CH-PS 662 543 A5) vorgesehen, auch eine eßbare Kollage (EP 0 175 173 A1). Diese Unterlagen tragen nicht zur Formung des Fleisches bei.

Aufgabe der Erfindung ist es, eine Umhüllung für das Fleisch anzugeben sowie ein Verfahren zum Umhüllen des Fleisches, welche/welches das Fleisch im verpackten Zustand im Querschnitt aus seiner üblicherweise unrunden Form in eine wenigstens annähernde Kreisform ändert und welche/welches gleichzeitig das Fleisch verpackt.

Diese Aufgabe wird durch das kennzeichnende Merkmal des Anspruches 1 gelöst, gegebenenfalls durch das Verfahren nach dem Anspruch 12.

Dadurch, daß das Netz jetzt durch einen dauerelastischen Schlauch oder Beutel ersetzt ist, legt sich dieser Schlauch oder Beutel bei geeigneter Dicke des Fleischstückes fest auf das Fleisch, indem er sich im Querschnitt zusammenzieht. Er ändert hierdurch eine ovale Form im Querschnitt in eine runde (kreisförmige) Form des Fleisches. Hierdurch wird die Qualität des Fleisches nach Ansicht des Käufers verbessert.

Der Schlauch selbst ist vorteilhaft gummielastisch.

Er kann darüber hinaus auch mit netzartigen Gummischnüren oder dergleichen verbunden sein, damit diese die Aufgabe der Erhaltung oder Schaffung des runden Querschnittes zusätzlich fördern.

Durch das Zusammenziehen des Schlauches wird der weitere Vorteil erzielt, daß sich die Hülle praktisch ohne besonderen Luftentzug fest auf das Fleisch legt, so daß nur noch geringfügige technische Maßnahmen durchgeführt werden müssen, um die Restluft dem Schlauch zu entziehen vor dessen endgültigem Verschweißen an den offenen Enden, falls dies gewünscht wird.

Auf der Zeichnung sind Ausführungsbeispiele der Erfindung dargestellt, und zwar zeigen:
- Fig. 1: ein erstes Ausführungsbeispiel in Seitenansicht;
- Fig. 2: das verpackte Fleischstück nach Fig. 1;
- Fig. 3: eine geänderte Ausbildung;
- Fig. 4: einen Längsschnitt durch die Fig. 3;
- Fig. 5: eine geänderte Ausbildung der Fleischeinfüllvorrichtung;
- Fig. 6: ein weiteres Ausführungsbeispiel der Erfindung.

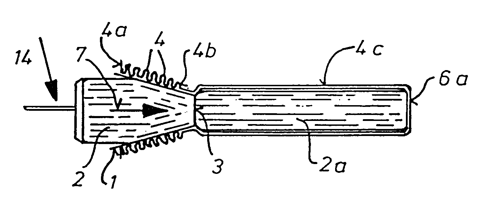

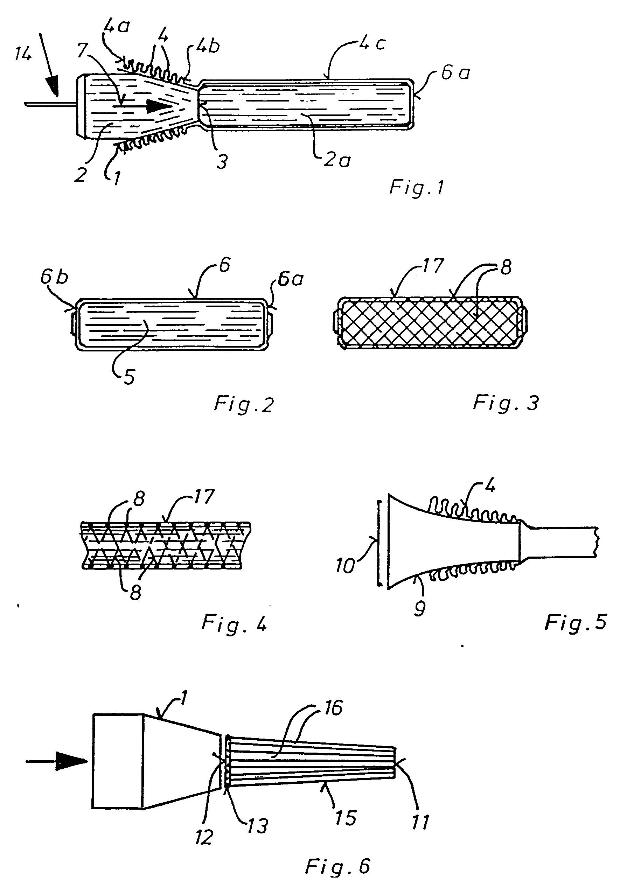

Gemäß Fig. 1 wird durch einen Trichter (1) ein Fleischstück (2) geschoben, das sich am Ende (3) des Trichters im Querschnitt zusammendrückt. Auf den Trichter (1) ist ein elastischer Folienschlauch (4) gezogen, derart, daß er sich auf dem Trichter am linken Ende (4a) erweitert hat und am rechten Ende (4b) auf dem Trichter seinen engsten Durchmesser aufweist. Der Folienschlauch liegt in genügendem Vorrat auf dem Trichter (1). Das Fleischstück (2) wird in Richtung des Pfeiles (7) durch das Ende (3) des Trichters (1) als im Querschnitt zusammengepreßtes Stück (5) in das Folienschlauchstück (6) eingeschoben, das im Querschnitt kleiner ist, und nimmt deshalb auch ohne vorherige Verschweißung eines Endes des Folienschlauches diesen mit. Üblicherweise beläßt man zum Verschweißen am Anfang und am Ende des Folienschlauches einen Überschuß, mit dem dann die Verschweißung vorgenommen wird. Der Folienschlauch (4) legt sich dann elastisch als Folienstück (4c) fest auf das Fleischstück (2), so daß nach dem Einschieben des Fleischstückes in den Schlauch nur noch ein eventuell notwendiger Luftentzug und danach die Verschweißung stattfinden muß.

Gemäß den Fig. 3 und 4 ist der Folienschlauch (17) mit einem gummiartigen Netz (8) verbunden, welches die Schlauchfolie auf das Fleischstück zusätzlich zieht.

Gemäß Fig. 6 wird das Fleisch wieder durch einen Trichter (1) geschoben, der im vorliegenden Fall aus Plastikmaterial besteht. Sein linkes Ende entspricht dem maximalen Fleischdurchmesser. An dem rechten Ende des Trichters (1) sind federnd gelagerte Stäbe (16) angeordnet, welche sich zur Austrittsöffnung (11) in ihrem Querschnitt verringern. Der Austrittsdurchmesser entspricht etwa der Hälfte des Eintrittsdurchmessers (12). Durch das Durchschieben des Fleischstückes wird dieses zusammengedrückt und die Stäbe (16) federn auseinander. Die auf dem Trichter (1) angeordnete Folie, kann in dieser Form vom Hersteller auf den Trichter gleich aufgezogen geliefert werden. Durch Aufschieben eines Ringes (13) werden die Stäbe (16) mit dem Trichter (1) verbunden. Das durchgeschobene Fleisch drückt die Stäbe (16) auseinander und dehnt damit auch die vom Trichter (1) abgezogene Folie, so daß sich diese am Austritt (11) fest auf das Fleisch legt.

Am Anfang und am Ende des Fleischstückes läßt man, wie oben ausgeführt, einen Folienüberschuß stehen, der nach dem Luftabzug verschweißbar ist. Die Verschweißung kann hierbei gleichzeitig an beiden Enden (6a, 6b) erfolgen.

Gemäß Fig. 5 ist der elastische Folienschlauch (4) auf einem konischen Kunststoffstück (9) als Ersatz für den Trichter (1) der Fig. 1 vom Hersteller geliefert und bereits mit dem Folienschlauch belegt. Das Stück (9) kann mit dem Einschiebemechanismus (10) verbunden werden.

## Patentansprüche

1. Verpackungshülle für Fleisch,
**dadurch** **gekennzeichnet**, daß sie ein elastischer Verpackungsschlauch oder -beutel ist, der das Fleisch in eine annähernd runde (kreisförmige) Querschnittsform zwingt.

2. Hülle nach Anspruch 1, dadurch gekennzeichnet, daß der Schlauch (4) oder Beutel wenigstens in seinem Querschnitt elastisch ausgebildet ist.

3. Hülle nach Anspruch 1, dadurch gekennzeichnet, daß sie auch in ihrer Länge elastisch ist.

4. Hülle nach Anspruch 1, dadurch gekennzeichnet, daß sie aus einer Kunststoffolie besteht.

5. Hülle nach Anspruch 1, dadurch gekennzeichnet, daß die elastische radiale Dehnbarkeit mindestens 50% des Schlauchumfanges im Querschnitt beträgt und ihre eventuelle Längsdehnbarkeit mindestens 25%.

6. Hülle nach Anspruch 1, dadurch gekennzeichnet, daß sie dauerelastisch ist.

7. Hülle nach Anspruch 1, dadurch gekennzeichnet, daß sie annähernd luftundurchlässig ist.

8. Hülle nach Anspruch 1, dadurch gekennzeichnet, daß sie verschweißbar ist.

9. Hülle nach Anspruch 1, dadurch gekennzeichnet, daß sie aus zwei übereinandergelegten Folienbändern besteht, welche an ihren Längsrändern miteinander verschweißt sind.

10. Hülle nach Anspruch 1, dadurch gekennzeichnet, daß im Material des Schlauches (17) oder auch auf seiner Oberfläche ein elastisches, gummiartiges Netz (8) vorgesehen ist.

11. Hülle nach Anspruch 1, dadurch gekennzeichnet, daß sie auf einem mit der Einfüllmaschine verbindbaren zylindrischen oder konischen Teil (9) aufgebracht ist, und daß der zylindrische oder konische Teil (9) mit dem Anfangsteil der Fleischzufuhreinrichtung (10, 14) verbindbar ist.

12. Hülle nach Anspruch 10, dadurch gekennzeichnet, daß sie auf mit dem konischen Teil (9) verbindbaren radialelastischen Stäben (16) aufgebracht ist, welche ringförmig angeordnet sind und sich im Querschnitt verjüngen.

13. Verfahren zum Verpacken von Fleisch mit einer Hülle nach Anspruch 1, dadurch gekennzeichnet, daß die Hülle über ein Rohr gezogen wird, daß das Fleisch durch das Rohr geschoben wird, derart, daß sich beim Durchschieben des Fleisches die Hülle als Verpackung um das Fleisch legt und dieses in eine annähernd runde (kreisförmige) Form zwingt.

14. Verfahren nach Anspruch 13, dadurch gekennzeichnet, daß die Hülle beim Verpacken des Fleisches über radial-elastische Stäbe gezogen wird, welche ringförmig angeordnet sind und sich im Querschnitt verjüngen.

15. Verfahren nach Anspruch 13, dadurch gekennzeichnet, daß der Schlauch (4, 17) oder Beutel nach dem Einschieben des Fleisches an seinen Enden mit Hilfe eines belassenen Folienüberschusses verschweißt wird.

16. Verfahren nach Anspruch 13, dadurch gekennzeichnet, daß dem Schlauch oder Beutel nach dem Einfüllen des Fleisches die Luft entzogen wird.

## Claims

1. Packaging envelope for meat,
**characterized in that** it is a flexible packaging sleeve or bag which forces the meat into an approximately round (circular) cross-sectional shape.

2. Envelope according to claim 1, characterized in that the sleeve (4) or bag is of flexible form at least in its cross section.

3. Envelope according to claim 1, characterized in that it is also flexible in its length.

4. Envelope according to claim 1, characterized in that it is made of a plastic film.

5. Envelope according to claim 1, characterized in that the flexible radial extensibility is equivalent to at least 50% of the sleeve circumference in cross section, and any longitudinal extensibility to at least 25%.

6. Envelope according to claim 1, characterized in that it is permanently flexible.

7. Envelope according to claim 1, characterized in that it is virtually airtight.

8. Envelope according to claim 1, characterized in that it is weldable.

9. Envelope according to claim 1, characterized in that it comprises two superimposed film sheets welded to each other at their longitudinal edges.

10. Envelope according to claim 1, characterized in that flexible, rubbery netting (8) is provided in the material of the sleeve (17) or else on its surface.

11. Envelope according to claim 1, characterized in that it is mounted on a cylindrical or conical part (9) which can be connected to a filling machine and that the cylindrical or conical part (9) can be connected to the initial part of the meat-infeed device (10, 14).

12. Envelope according to claim 10, characterized in that it is mounted on radially flexible rods (16) connectable to the conical part (9) which are arranged in a ring and have their cross section tapering.

13. A process for packaging meat with an envelope according to claim 1, characterized in that envelope is drawn over a tube, that the meat is pushed through the tube in such a way that the envelope places itself round the meat as the meat is pushed through and forces it into a virtually round (circular) shape.

14. A process in accordance with claim 13, characterized in that the envelope is mounted during the packaging of the meat on radially flexible rods which are arranged in a ring and have their cross section tapering.

15. A process in accordance with claim 13, characterized in that the sleeve (4, 17) or bag is welded at its ends by means of a surplus length of film left at its ends after the meat has been pushed in.

16. A process in accordance with claim 13, characterized in that the air is withdrawn from the sleeve or bag after the meat has been filled in.

## Revendications

1. Enveloppe d'emballage pour de la viande, caractéri sée par le fait qu'elle est formée par un tuyau ou un sachet élastique d'emballage, qui impose à la viande de posséder une forme en coupe transversale approximativement ronde (circulaire).

2. Enveloppe selon la revendication 1, caractérisée en ce que le tuyau (4) ou le sachet est agencé de manière à être élastique au moins dans sa section transversale.

3. Enveloppe selon la revendication 1, caractérisée en ce qu'elle est élastique également sur sa longueur.

4. Enveloppe selon la revendication 1, caractérisée en ce qu'elle est constituée par une feuille de matière plastique.

5. Enveloppe selon la revendication 1, caractérisée en ce que l'extensibilité radiale élastique est égale à au moins 50 % de la circonférence du tuyau en coupe transversale et que son extensibilité longitudinale éventuelle est égale au moins à 25 %.

6. Enveloppe selon la revendication 1, caractérisée en ce qu'elle présente une élasticité permanente.

7. Enveloppe selon la revendication 1, caractérisée en ce qu'elle est approximativement étanche à l'air.

8. Enveloppe selon la revendication 1, caractérisée en ce qu'elle est soudable.

9. Enveloppe selon la revendication 1, caractérisée en ce qu'elle est constituée par deux bandes de feuilles superposées, qui sont scellées entre elles au niveau de leurs bords longitudinaux.

10. Enveloppe selon la revendication 1, caractérisée en ce que dans le matériau du tuyau (17) ou même sur sa surface, il est prévu un fil élastique en forme de caoutchouc (8).

11. Enveloppe selon la revendication 1, caractérisée en ce qu'elle est déposée sur une partie cylindrique ou conique (9), qui peut être raccordée à la machine de remplissage, et que la partie cylindrique ou conique (9) peut être raccordée à la partie initiale du dispositif (10,14) d'amenée de la viande.

12. Enveloppe selon la revendication 10, caractérisée en ce qu'elle est disposée sur des barreaux radialement élastiques (16), pouvant être raccordés à la partie conique (9) et qui sont disposés selon une disposition annulaire et ont une forme rétrécie en coupe transversale.

13. Procédé pour emballer de la viande à l'aide d'une enveloppe selon la revendication 1, caractérisé en ce qu'on tire l'enveloppe sur un tube, qu'on insère la viande dans le tube de telle sorte que lors du refoulement de la viande, l'enveloppe s'applique à la manière d'un emballage autour de la viande et impose à la viande de prendre une forme approximativement ronde (circulaire).

14. Procédé selon la revendication 13, caractérisé en ce que lors de l'emballage de la viande, on tire l'enveloppe sur des barreaux élastiques radialement, qui sont disposés selon une disposition en anneau et ont une section transversale rétrécie.

15. Procédé selon la revendication 13, caractérisé en ce qu'après l'insertion de la viande, on scelle les extrémités du tuyau à l'aide d'une partie en excès subsistante de la feuille.

16. Procédé selon la revendication 13, caractérisé en ce qu'on retire l'air du tuyau ou du sachet après son remplissage par la viande.
